# FASCICULE DE BREVET EUROPEEN

(11) **EP 3 301 077 B1**
(45) Date de publication et mention de la délivrance du brevet: **20.11.2019**
(21) Numéro de dépôt: 17194582.7
(22) Date de dépôt: 03.10.2017
(51) Int. Cl.: C02F 1/467, F16L 41/03, C02F 103/42, F16L 55/115

(54) **CELLULE DE TRAITEMENT ADAPTABLE A PLUSIEURS TYPES D'INSTALLATIONS DE CANALISATIONS**
BEHANDLUNGSZELLE, DIE AN VERSCHIEDENE TYPEN VON KANALISATIONSANLAGEN ANGEPASST WERDEN KANN
TREATMENT CELL WHICH CAN BE ADAPTED TO A PLURALITY OF TYPES OF PIPE INSTALLATIONS

(30) Priorité: 03.10.2016 FR 1659529; 23.01.2017 FR 1750537
(43) Date de publication de la demande: 04.04.2018
(73) Titulaire: Pool Technologie, 34130 Valergues (FR)
(72) Inventeur: GRARD, Philippe, 34130 MAUGUIO (FR)
(74) Mandataire: Rhein, Alain

(56) Documents cités:
- FR-A1- 3 018 517
- US-A- 4 525 272
- US-A- 5 460 702
- US-A1- 2014 326 680

## Description

La présente invention concerne une cellule de traitement en particulier par électrolyse, pour un système de traitement, en particulier pour des eaux de piscine, de pataugeoires ou d'aquarium, ou des systèmes d'irrigation.

L'invention concerne en outre des appareils de mesure ou de traitement comprenant une telle cellule.

Une telle cellule de traitement des eaux de piscine par électrolyse est par exemple décrite dans la publication de la demande de brevet FR 3 018 517.

Dans ce domaine, la cellule de traitement doit généralement être raccordée à un système de canalisations existant. Suivant les cas, les canalisations existantes peuvent avoir des configurations diverses et variées, pour ce qui concerne l'arrivée d'eau et la sortie. Par exemple, ces canalisations peuvent être parallèles entre-elles, perpendiculaires, décalées, superposées. Suivant la configuration, il peut être nécessaire de rechercher plusieurs canalisations de raccordement ou un système complexe, de raccords ou d'adaptateurs, augmentant l'encombrement de l'installation.

Un objectif de la cellule de traitement selon l'invention est de proposer une cellule de traitement dont le raccordement est adaptable à plusieurs configurations différentes de canalisations existantes.

Pour ce faire, l'invention propose une cellule de traitement comprenant une enceinte logeant une pièce de traitement, l'enceinte comprenant deux embouchures de connexion chacune étant configurée pour connecter une canalisation, caractérisée en ce que l'enceinte comprend en outre au moins une troisième embouchure de connexion et une quatrième embouchure de connexion configurées pour connecter une canalisation, lesdites embouchures étant angulairement espacées suivant des angles plats ou droits, la pièce de traitement étant disposée au croisement des embouchures, l'enceinte comprenant un premier moyen d'obturation et un deuxième moyen d'obturation configurés pour obturer une desdites embouchures, ladite cellule comportant encore une branche de raccordement pour chaque embouche de connexion, lesdites branches de raccordement étant cylindrique, de même diamètre et comportant une extrémité identique, ladite cellule de traitement étant configurée pour qu'une canalisation d'entrée puisse être connectée indépendamment sur l'une des embouchures et une canalisation de sortie sur une autre embouchure, les autres embouchures étant obturées par les moyens d'obturation de sorte à raccorder lesdites canalisations d'entrée et de sortie dans plusieurs configurations.

Selon d'autres aspects pris isolément ou combinés selon toutes les combinaisons techniquement réalisables :
- la cellule comprend au moins une structure porteuse débouchant sur une branche, configurée pour introduire et maintenir un outil dans la branche, ladite structure porteuse formant projection obliquement par rapport à une normale à un axe longitudinal de la branche ; et/ou
- ladite structure porteuse s'étend suivant un angle oblique de préférence inférieur à 90 degrés et de préférence supérieur ou égal à 10 degrés, en particulier d'environ 15 à 25 degrés, par rapport à la normale à l'axe de la branche ; et/ou
- les embouchures s'étendent suivant des axes sensiblement coplanaires ; et/ou
- le moyen d'obturation comprend un bouchon pouvant recevoir des éléments de la pièce de traitement ; et/ou
- la cellule comprend un collet de raccordement qui comprend un contour de cloisonnement, et un anneau de cloisonnement ; et/ou
- le collet comprend un contour de cloisonnement interne configuré pour recevoir intérieurement une canalisation de petite taille et un contour de cloisonnement externe configuré pour recevoir extérieurement une canalisation de plus grande taille, l'anneau de cloisonnement étant configuré pour coopérer avec l'embouchure de connexion.

L'invention porte également sur un appareil de mesure et/ou d'injection comprenant une cellule de traitement selon l'invention, et au moins un outil de mesure et/ou d'injection pouvant être inséré dans ladite structure porteuse.

L'invention sera davantage détaillée par la description de modes de réalisation non limitatifs, et sur la base des figures annexées, dans lesquelles :

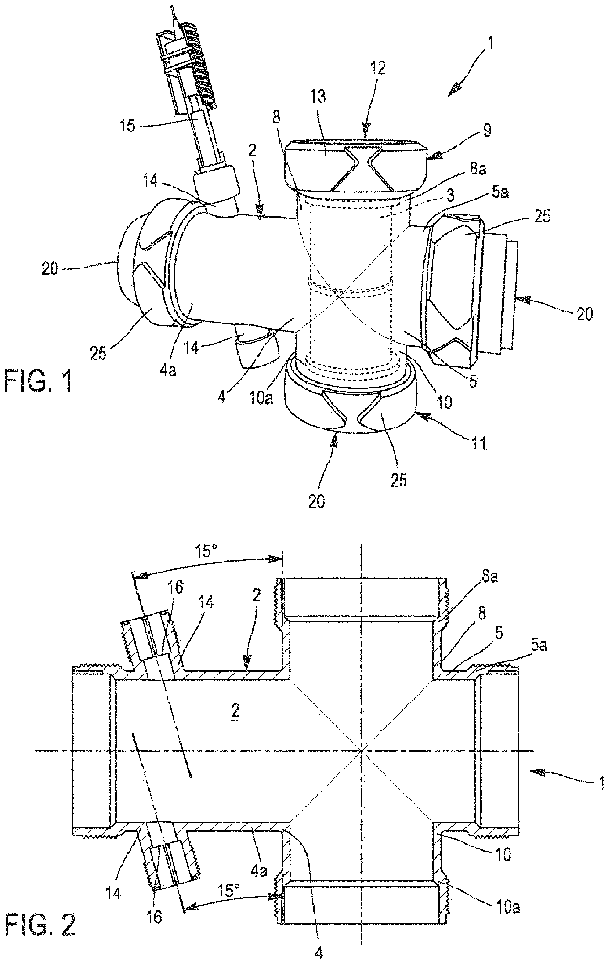

- la figure 1 est une vue d'ensemble de la cellule de traitement selon une variante préférée, qui est ici une cellule d'électrolyse ;
- la figure 2 est une vue en coupe de la cellule de la figure 1 face d'une partie du dispositif de la figure 1 ;
- les figures 3A et 3B sont des vues en coupe d'un collet de raccordement en position interne et externe ;
- la figure 4 est une vue dans l'espace d'une structure porteuse ;
- la figure 5 est une vue dans l'espace de pièces protectrices et/ou de décoration de la cellule de traitement ;
- la figure 6 est une vue de côté d'un bouchon ;
- les figures 7A à 7D sont des vues de configurations possibles avec la cellule selon l'invention en comparaison aux cellules de l'art antérieur ; et

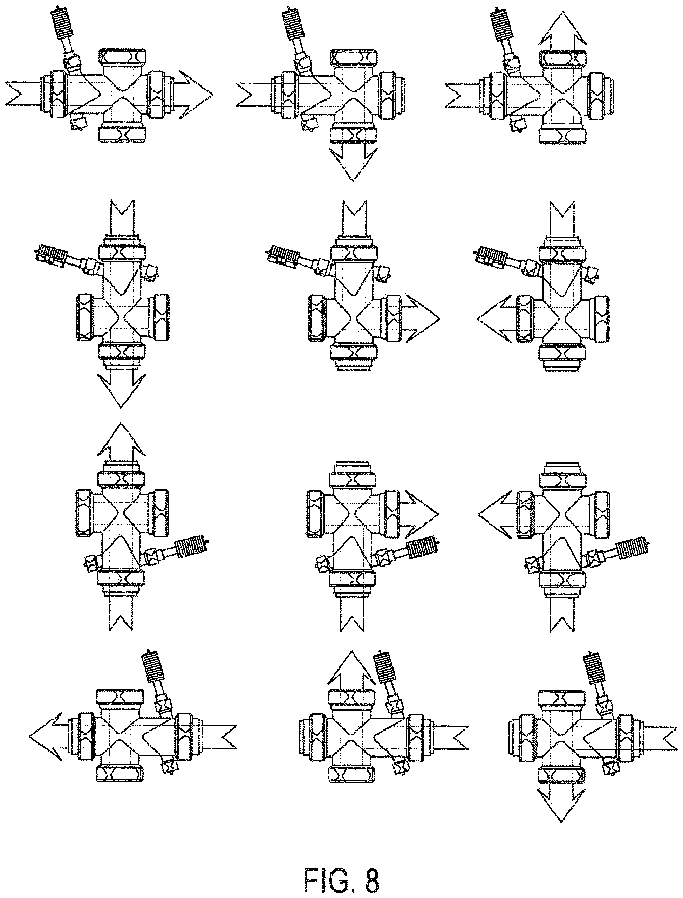

- la figure 8 illustre les configurations possibles d'une cellule selon l'invention.

La présente invention concerne une cellule de traitement 1 en particulier par électrolyse, pour un système de traitement, en particulier pour des eaux de piscine, de pataugeoires ou d'aquarium, ou des systèmes d'irrigation.

La cellule de traitement 1 comprend une enceinte 2 logeant une pièce de traitement 3. L'enceinte 2, également appelée vase, englobe un espace dans lequel circule l'eau à traiter. C'est également un espace dans lequel est disposée la pièce de traitement 3, par exemple une électrode pour un traitement pouvant être notamment par électrolyse, par hydrolyse de l'eau, ou par ionisation.

La cellule 1 comprend généralement une arrivée d'eau et une sortie. L'eau à traiter arrive dans la cellule par l'arrivée d'eau baigne dans l'enceinte 2 au contact de la pièce de traitement 3, puis ressort par la sortie.

Sur ce principe, l'enceinte 2 comprend deux embouchures de connexion 4, 5 chacune étant configurée pour connecter une canalisation 6, 7. Ainsi, une canalisation d'arrivée d'eau 6 peut être raccordée sur une première desdites embouchures 4, et une canalisation de sortie 7 peut être raccordée sur la deuxième 5. Les canalisations 6, 7 sont classiquement en PVC.

Selon l'invention, l'enceinte 2 comprend en outre au moins une troisième embouchure de connexion 8 configurée pour connecter une canalisation 6, 7, et un premier moyen d'obturation 9 configuré pour obturer une desdites embouchures 4, 5 ou 8.

Avantageusement, la troisième embouchure 8 permet de prévoir plusieurs configurations de raccordement à un réseau de canalisations 6, 7 en limitant le besoin de pièces de raccordement supplémentaires, et en limitant ainsi l'encombrement de l'installation.

En particulier, les deux premières embouchures 4, 5 peuvent être alignées d'un côté et de l'autre de la cellule 2 et la troisième embouchure 8 peut être oblique, voire de préférence perpendiculaire aux deux autres 4, 5, de sorte à pouvoir raccorder des canalisations dans plusieurs configurations. Par exemple, des canalisations d'arrivée 6 et de sortie 7 d'eau parallèles entre elles et disposées l'une à la suite de l'autre peuvent être raccordées en utilisant les deux premières embouchures 4, 5, et en refermant la troisième embouchure 8. Pour des canalisations d'arrivée 6 et de sortie 7 d'eau perpendiculaires entre elles et disposées l'une à la suite de l'autre, la première 4 et la troisième 8 embouchures peuvent être utilisées, et la deuxième 5 refermée.

La cellule de traitement 2 comprend en outre une quatrième embouchure de connexion 10 configurée pour connecter une canalisation 6, 7, et un deuxième moyen d'obturation 11 configuré pour obturer une desdites embouchures 4, 5, 8 ou 10.

Avantageusement, les quatre embouchures 4, 5, 8, 10 permettent de prévoir encore plus de configurations possibles, et donc une meilleure adaptabilité de la cellule 1 aux canalisations 6, 7 déjà présentes en limitant l'encombrement de l'installation.

La pièce de traitement 3 est disposée au croisement des embouchures. Cet aspect permet d'avoir un bon traitement de l'eau quel que soit l'entrée et la sortie utilisée. En particulier, les embouchures comportent des détrompeurs de positionnement pour orienter la pièce 3 dans le sens du flux.

Selon une variante, les embouchures 4, 5, 8, 10 s'étendent suivant des axes sensiblement coplanaires. Ainsi, les raccordements peuvent se faire suivant ces axes, de sorte à limiter l'encombrement de part et d'autre du plan comprenant ces axes.

Les embouchures 4, 5, 8, 10 sont angulairement espacées suivant des angles sensiblement identiques. En particulier, les embouchures sont angulairement espacées suivant des angles plats ou droits.

La cellule de traitement 1 comprend une branche de raccordement 4a, 5a, 8a ou 10a pour chaque embouchure 4, 5, 8 ou 10. Avantageusement, une branche de raccordement permet de mieux raccorder la cellule 1 à une canalisation 6, 7. Les branches sont de préférence cylindriques et de même diamètre. L'extrémité des branches est de préférence identique.

Selon une variante, une branche 4a est plus grande que les autres branches, en particulier selon une hauteur de cylindre. La plus grande branche 4a permet de laisser un espace pour disposer une ou plusieurs structures porteuses détaillées ci-dessous.

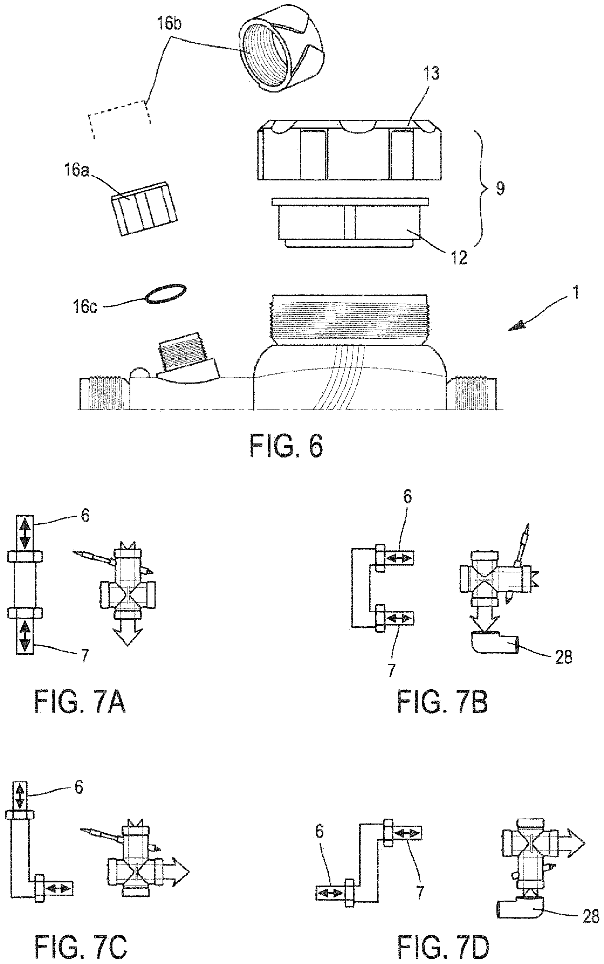

Selon une variante, au moins un moyen d'obturation 9 ou 11 comprend un bouchon 12 pouvant recevoir des éléments de la pièce de traitement 3. En particulier, une face du bouchon 12 peut recevoir une partie de la pièce de traitement, et l'autre face peut recevoir des éléments de connexion de la pièce de traitement 3. Le moyen d'obturation 9 peut comprendre en outre un écrou de branche 13 associé au bouchon 12, et le bouchon 12 peut être plus large que l'embouchure, en particulier la branche 4a. En particulier, le bouchon 12 a une forme globalement prismatique avec une base plus petite que la branche et une base plus grande que la branche. Cet aspect est illustré dans la figure 6. Le changement de taille peut se faire de manière progressive ou de préférence séquentielle comme illustré dans la figure 6.

Le vissage de l'écrou de branche 13 permet de fixer le bouchon 12 sur la branche 4a. La pièce de traitement 3 peut être fixée au bouchon 12 du côté interne. Plus particulièrement, le bouchon 12 peut comprendre des logements permettant de connecter des câbles 12a extérieurs à la cellule 1, à la pièce de traitement 3, en particulier connecter l'électrode, de manière hermétique à l'eau.

Ainsi, les embouchures, en particulier les branches, comprennent un filetage pour recevoir l'écrou de branche 13.

Alternativement ou en combinaison, un moyen d'obturation peut aussi comprendre un couvercle (non représenté).

Selon une variante, la cellule de traitement 1 comprend au moins une structure porteuse 14 débouchant sur une branche 4a.

La structure porteuse 14 est configurée pour introduire et maintenir un outil 15 dans la branche 4a. Pour ce faire, l'outil 15 peut être introduit dans la structure porteuse et passer à travers l'ouverture pour pénétrer la branche 4a. L'outil 15 est en particulier une sonde ou un injecteur de liquide, en particulier une cartouche d'injection.

L'ensemble des structures porteuses 14 forme un porte-instrument permettant d'introduire et maintenir les outils près de la cellule, en particulier dans la grande branche. Ces outils peuvent être utilisés pour mesurer des paramètres de l'eau et/ou injecter un liquide se mélangeant à l'eau, par exemple de l'acide.

La sonde permet de mesurer des paramètres du liquide de la canalisation par exemple pour le corriger ou pour adapter un traitement de l'eau. La sonde peut être notamment une sonde pH, une sonde Redox dite ORP, une électrode de mise à la terre, une sonde de mesure de conductivité, une sonde de mesure de température, un capteur de débit, un capteur TDS, une sonde de chlore.

L'injecteur permet par exemple d'ajuster un paramètre tel que le pH ou la dureté en injectant un liquide adapté. L'injecteur peut aussi permettre d'injecter un produit de traitement. En particulier, l'injecteur comprend une structure à effet venturi, et de préférence une structure permettant le positionnement du liquide injecté dans le flux de la canalisation.

En outre, la structure porteuse 14 comprend un moyen de retenue 16 de l'outil configuré pour maintenir l'outil 15 à proximité de, et de préférence partiellement dans, la structure porteuse 14. Avantageusement, le moyen de retenue 16 de l'outil 15 permet d'éviter que l'outil 15 ne soit emporté dans la branche 4a. En particulier, le moyen de retenue 16 est un relief interne de la structure porteuse.

De préférence, la cellule comprend un joint d'insertion 16c. Le joint d'insertion 16c est de préférence une pièce séparée de la structure porteuse 14, dans un matériau adapté. On peut aussi envisager que ce joint d'insertion 16c soit une pièce rapportée de la structure porteuse 14.

De préférence, au moins une structure porteuse 14 comprend un écrou porteur 16a. L'écrou porteur 16a permet de fixer le joint d'insertion 16c tout en laissant une ouverture pour introduire l'outil 15. Selon une variante, un manchon comprenant une structure formant joint d'insertion peut être utilisé. L'écrou porteur 16a est de préférence vissable sur la structure porteuse 14. Avantageusement, le joint d'insertion 16c associé, à l'écrou porteur 16a, peut servir de moyen de retenue permettant d'éviter que l'outil 15 ne soit éjecté de la branche 4a. On peut en outre prévoir un couvercle 16b permettant d'obturer au moins une structure porteuse 14.

Selon une variante, ladite structure porteuse 14 forme projection obliquement par rapport à une normale à l'axe longitudinal de la branche 4a. En particulier, la structure porteuse 14 forme un angle donné d'un côté ou de l'autre par rapport à l'axe longitudinal. La projection est de préférence radiale, c'est-à-dire que son prolongement croise l'axe longitudinal.

Avantageusement, la structure porteuse 14 oblique associée à un outil permet de monter l'outil 15 en position sensiblement verticale (tête vers le haut) mais avec un angle oblique. En effet, pour certains capteurs de pH, plus particulièrement ceux du type à électrode de verre, et de certains capteurs Redox, lorsque la sonde est montée à la verticale vers le bas ou à l'horizontale, la sonde ne fonctionne plus en raison d'une bulle d'air venant perturber l'électronique de la sonde et qui engendre des données erratiques. Cette bulle d'air est générée par des réactions chimiques dans la partie de travail de la sonde de pH.

En outre, le montage de l'outil 15 permet de limiter l'encombrement horizontal. En effet, l'outil 15 n'occupe pas un volume horizontal significatif.

Selon une variante, ladite structure porteuse 14 s'étend suivant un angle oblique de préférence inférieur à 90 degrés et de préférence supérieur ou égal à 10 degrés, en particulier d'environ 15 à 25 degrés, par rapport à la normale à l'axe longitudinal de la branche. Avantageusement, une structure porteuse 14 portant une sonde « stylo » orientée à plus de 10 degrés par rapport à la verticale permet un fonctionnement quasiment normal de ladite sonde « stylo », en particulier même en dépit du vieillissement de la sonde. Les meilleurs résultats ont été obtenus avec une orientation d'environ 15 degrés.

Selon une variante, la cellule de traitement 1 comprend plusieurs structures porteuses 14. Avantageusement, l'utilisation de plusieurs structures porteuses 14 permet d'avoir plusieurs outils 15 pour des utilisations spécifiques en même temps, par exemple plusieurs capteurs en tandem ou au moins un capteur et au moins un injecteur sur la même branche 4a.

En particulier, la cellule de traitement 1 peut comprendre deux structures porteuses 14. Les structures porteuses 14 peuvent être sensiblement parallèles entre elles. Plus particulièrement, les deux structures porteuses 14 sont diamétralement opposées l'une à l'autre. Avantageusement, des structures porteuses 14 parallèles permettent d'éviter qu'un outil ne gêne l'autre du point de vue de l'encombrement spatial et la perturbation des données de mesure ou de l'injection.

L'outil inséré dans les structures porteuses 14 peut être un capteur, par exemple du type sonde « stylo », à savoir une sonde ayant sensiblement la forme d'un stylo. L'outil 15 inséré peut aussi être un injecteur de liquide, en particulier une cartouche d'injection.

Selon une variante, la cellule de traitement 1 comprend une cage de protection d'outil 17 étant de préférence montée sur la structure porteuse 14. La cage 17 comprend un corps de protection 17a configuré pour entourer l'outil 14 et au moins une patte de fixation 19 configurée pour coopérer avec l'écrou 16a pour fixer la cage 17 sur la structure porteuse 14. Le corps de protection 17a peut comporter des aspérités sur sa partie externe. En particulier, la patte de fixation 19 est configurée pour coopérer avec l'écrou porteur 16a pour fixer la cage 17 à la structure porteuse 14. Plus particulièrement, l'écrou porteur 16a est muni d'une gorge dans laquelle la patte de fixation 19 glisse. La patte de fixation 19 empêche l'instrument d'être trop enfoncé dans la canalisation, et positionne l'outil 15 dans le bon sens. La patte de fixation 19 empêche l'instrument d'être éjecté de la canalisation.

En particulier, la cage de protection 17 forme une entretoise. De préférence, la cage 17 entoure partiellement l'outil 15 et une pièce complémentaire 18 coopère avec la cage 17 pour entourer complètement l'outil. La pièce complémentaire 18 peut être fixée à la cage 17 par complémentarité de forme, en particulier par glissement. Avantageusement, une structure de cage en deux pièces est un moyen simplifié d'entourer complètement l'outil 15 pour une meilleure protection. En particulier, la pièce complémentaire 18 est une clé de verrouillage coopérant avec ladite entretoise. L'entretoise associée à la clé de verrouillage forme une bride de sécurité.

La cellule de traitement 1 comprend en outre un moyen 17b de blocage et de positionnement d'outil. Le moyen de blocage et de positionnement comprend un relief adapté à bloquer l'outil en position en dépit des mouvements par exemple du liquide. Une portion de l'outil est coulissée dans le moyen de blocage suivant une direction parallèle à l'axe longitudinal de la structure porteuse 14. Le moyen 17b fait de préférence partie de la cage 17 et/ou de la pièce complémentaire 18, en particulier la clé de verrouillage.

En particulier, l'entretoise et la clef de verrouillage sont conçues pour la quasi-totalité des sondes du marché. Pour réaliser cette fonction, l'entretoise est munie de stries permettant à la clef de s'ajuster parfaitement à une extrémité de sonde « stylo ».

Selon une variante préférée, l'outil 15 est monté sur la cage 17 et sur l'écrou porteur 16a, et l'ensemble est monté, en particulier vissé, sur la structure porteuse 14. Le vissage de cet ensemble réalise un blocage de l'outil 15 sur la cellule de traitement 1.

Selon une variante, la cellule 1 comprend un collet de raccordement 20 qui comprend de préférence au moins un contour de cloisonnement 21, 22, et un anneau de cloisonnement 23. Le collet de raccordement 20 sert à raccorder la cellule à la canalisation 6, 7. Au moins un joint torique 20a, 20b peut être prévu entre la canalisation et le collet 20.

Un collage de la canalisation 6, 7 sur le collet 20 est de préférence prévu pour une meilleure étanchéité. En particulier, le collet 20 peut être sous forme sensiblement cylindrique. Le contour de cloisonnement est un élément de cylindre interne (21) et/ou externe (22). En particulier, un premier joint torique 20a est prévu pour coopérer avec le contour interne ou de préférence l'anneau de cloisonnement 23. En outre, en particulier, un deuxième joint torique 20b est prévu pour coopérer avec le contour externe 22. Ceci permet d'assurer l'étanchéité dans deux configurations possibles du collet 20.

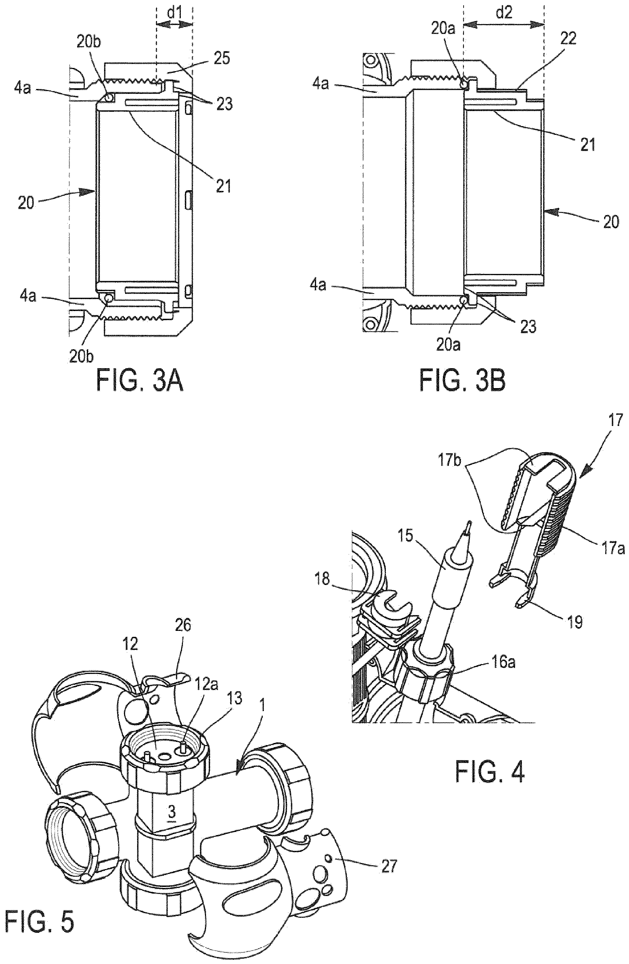

L'anneau de cloisonnement 23 est une base du cylindre formant le collet 20. Le collet 20 a de préférence une épaisseur croissante d'une base à l'autre de sorte qu'une base peut être introduite dans une branche 4a et l'autre base peut être apposée sur une branche 4a. La surface de révolution peut être sensiblement bifide comme par exemple illustré dans les figures 3A et 3B.

La forme de la branche 4a permet, grâce à une complémentarité avec le collet 20, deux types de montage (Interne/Externe). Le montage interne réduit fortement l'encombrement comme on peut le voir sur la figure 3A (références d1 et d2).

Dans la variante préférée, le collet peut être disposé dans deux positions interne ou externe. Dans la position interne, le collet 20 est placé à l'intérieur de la branche de raccordement 4a. Cette position peut être illustrée par la figure 3A. La canalisation 6 peut être introduite dans le collet 20 de sorte à être raccordée sur un contour de cloisonnement interne 21 du collet 20. Le contour de cloisonnement externe 22 coopère avec la branche de raccordement 4a et l'anneau de cloisonnement 23 coopère avec un écrou de raccordement 25. L'écrou de raccordement 25 est de préférence le même que l'écrou de branche 13. Cet agencement est par exemple adapté pour des canalisations de 63mm ou 2 pouces. Un adaptateur peut être prévu pour d'autres diamètres de canalisations.

Dans la position externe, le collet 20 est apposé sur la branche de raccordement 4a. Cette position peut être illutée par la figure 3B. La canalisation 6 peut être introduite dans le collet 20 comme expliqué précédemment ou positionnée autour de sorte à être raccordée sur le contour de cloisonnement externe 22 du collet 20. L'anneau de cloisonnement 23 coopère avec la branche de raccordement 4a et l'écrou de raccordement 25. En particulier, l'anneau de cloisonnement 23 comprend une gorge recevant la branche de raccordement 4a. De préférence le joint torique 20a est prévu entre l'anneau de cloisonnement 23 et la branche de raccordement 4a pour assurer l'étanchéité.

Le collet de raccordement 20 peut être en PVC. Une colle telle qu'une colle pour canalisations en PVC est de préférence utilisée pour le raccordement.

Selon une variante, la cellule 1 peut être équipée de pièces de protection 26, 27 et/ou de décoration venant être fixées à l'extérieur de la cellule. Les pièces 26, 27 peuvent être sous la forme d'enjoliveurs venant emmancher la cellule de traitement 1 de part et d'autre. Ces pièces permettent de prévoir une marque et/ou une couleur spécifique sur une cellule de traitement 1 générique.

La cellule de traitement 1 est particulièrement adaptée aux canalisations d'eaux de piscine, dans des réseaux ayant des pressions de service entre 0 et 6 bars. La constitution des éléments de la cellule 1 est de préférence adaptée en conséquence.

L'invention porte en outre sur un appareil de mesure et/ou d'injection comprenant une cellule de traitement 1 telle que décrite précédemment, et au moins un outil 15 tel qu'un capteur et/ou un injecteur, en particulier une cartouche d'injection. Un tel appareil permet de mesurer des paramètres du liquide de la cellule 1 et/ou d'injecter un produit dans la cellule 1, par exemple de l'acide.

L'invention porte également sur une méthode de montage d'une cellule de traitement 1 sur un réseau de canalisations comprenant une canalisation d'entrée 6 et une canalisation de sortie 7. La méthode comprend une étape de raccorder une première embouchure 4 de la cellule de traitement 1 à la canalisation d'entrée 6, optionnellement raccorder une pièce de raccordement 28, par exemple en « L », à une deuxième embouchure 5, puis raccorder la deuxième embouchure 5 ou optionnellement la pièce de raccordement 28 à la canalisation de sortie 7, et fermer l'autre ou les autres embouchures.

En particulier, un collet 20 tel que décrit ci-dessus est utilisé. La méthode selon l'invention permet d'effectuer un raccordement de la cellule de traitement 1 sans avoir besoin de plusieurs pièces de raccordements tout en étant adaptable à plusieurs types de configurations de réseaux de canalisations. Cet aspect est en particulier illustré dans les figures 7A à 7D, où les installations à gauche sont celles selon l'art antérieur et celles à droite sont celles selon l'invention. L'invention permet toutes les configurations qui existent individuellement à ce jour, mais en utilisant les embouchures de la cellule 1 pour limiter l'encombrement de l'installation et s'adapter aux canalisations existantes.

La cellule 1 illustrée dans les figures peut avoir jusqu'à 17 configurations en fonctions du sens du flux, de l'orientation du flux, de la verticalité ou de l'horizontalité de l'installation.

En fonction de la configuration des canalisations d'entrée et de sortie, des embouchures correspondantes de la cellules sont utilisées et les autres sont obturées. Il s'agit alors d'un procédé particulier.

Le procédé comprend une étape de connecter une canalisation d'entrée indépendamment sur l'une des embouchures en fonction de la configuration de canalisations. En particulier, l'embouchure la plus adéquate est sélectionnée.

En outre, le procédé comprend une étape de connecter une canalisation de sortie sur une autre embouchure, en particulier, la plus adéquate sélectionnée.

Les autres embouchures non sélectionnées sont obturées les moyens d'obturation de sorte à raccorder lesdites canalisations d'entrée et de sortie.

## Revendications

1. Cellule de traitement (1) comprenant une enceinte (2) logeant une pièce de traitement (3), l'enceinte (2) comprenant deux embouchures de connexion (4, 5) chacune étant configurée pour connecter une canalisation (6, 7), **caractérisée en ce que** l'enceinte (2) comprend en outre au moins une troisième embouchure de connexion (8) et une quatrième embouchure de connexion (10) configurées pour connecter une canalisation (6, 7), lesdites embouchures (4, 5, 8, 10) étant angulairement espacées suivant des angles plats ou droits, la pièce de traitement (3) étant disposée au croisement des embouchures (4, 5, 8, 10), l'enceinte (2) comprenant un premier moyen d'obturation (9) et un deuxième moyen d'obturation (11) configurés pour obturer une desdites embouchures (4, 5, 8, 10), ladite cellule (1) comportant encore une branche de raccordement (4a, 5a, 8a, 10a) pour chaque embouche de connexion (4, 5, 8, 10), lesdites branches de raccordement étant cylindrique, de même diamètre et comportant une extrémité identique, ladite cellule de traitement étant configurée pour qu'une canalisation d'entrée (6) puisse être connectée indépendamment sur l'une des embouchures (4, 5, 8, 10) et une canalisation de sortie (7) sur une autre embouchure, les autres embouchures étant obturées par les moyens d'obturation de sorte à raccorder lesdites canalisations d'entrée et de sortie dans plusieurs configurations.

2. Cellule de traitement selon la revendication précédente, comprenant au moins une structure porteuse (14) débouchant sur une branche (4a), configurée pour introduire et maintenir un outil (15) dans la branche (4a), ladite structure porteuse (14) formant projection obliquement par rapport à une normale à un axe longitudinal de la branche (4a).

3. Cellule de traitement selon la revendication précédente, dans laquelle ladite structure porteuse (14) s'étend suivant un angle oblique, de préférence inférieur à 90 degrés et de préférence supérieur ou égal à 10 degrés, en particulier d'environ 15 à 25 degrés, par rapport à la normale à l'axe de la branche (4a).

4. Cellule de traitement selon l'une des revendications précédentes, dans laquelle les embouchures (4, 5, 8, 10) s'étendent suivant des axes sensiblement coplanaires.

5. Cellule de traitement selon l'une des revendications précédentes, dans laquelle le moyen d'obturation (9, 11) comprend un bouchon (12) pouvant recevoir des éléments de la pièce de traitement (3).

6. Cellule de traitement selon la revendication précédente, comprenant un collet de raccordement (20) qui comprend au moins un contour de cloisonnement (21, 22), et un anneau de cloisonnement (23).

7. Cellule de traitement selon la revendication précédente, dans laquelle le collet comprend un contour de cloisonnement interne (21) configuré pour recevoir intérieurement une canalisation de petite taille et un contour de cloisonnement externe (22) configuré pour recevoir extérieurement une canalisation de petite taille, l'anneau de cloisonnement (23) étant configuré pour coopérer avec l'embouchure de connexion (4, 5, 8, 10).

8. Appareil de mesure et/ou d'injection comprenant une cellule de traitement selon l'une des revendications précédentes dont au moins la revendication 2, et au moins un outil (15) de mesure et/ou d'injection pouvant être inséré dans ladite structure porteuse (14).

## Patentansprüche

1. Bearbeitungszelle (1), umfassend ein Gehäuse (2), das ein Bearbeitungsteil (3) aufnimmt, wobei das Gehäuse (2) zwei Anschlussöffnungen (4, 5) umfasst, die jeweils konfiguriert sind, um ein Rohr (6, 7) anzuschließen, **dadurch gekennzeichnet, dass** das Gehäuse (2) ferner mindestens eine dritte Anschlussöffnung (8) und eine vierte Anschlussöffnung (10) umfasst, die konfiguriert sind, um ein Rohr (6, 7) anzuschließen, wobei die besagten Öffnungen (4, 5, 8, 10) winklig im flachen oder rechten Winkel beabstandet sind, wobei das Bearbeitungsteil (3) am Schnittpunkt der Öffnungen (4, 5, 8, 10) angeordnet ist, wobei das Gehäuse (2) ein erstes Verschlussmittel (9) und ein zweites Verschlussmittel (11) umfasst, welche zum Verschließen einer der Öffnungen (4, 5, 8, 10) konfiguriert sind, wobei die besagte Zelle (1) weiterhin einen Anschlussstrang (4a, 5a, 8a, 10a) für jede Anschlussöffnung (4, 5, 8, 10) umfasst, wobei die Anschlussstränge zylindrisch, mit gleichem Durchmesser sind und ein identisches Ende aufweisen, wobei die Bearbeitungszelle so konfiguriert ist, dass ein Einlassrohr (6) unabhängig an eine der Öffnungen (4, 5, 8, 10) und ein Auslassrohr (7) an eine andere Öffnung anschließbar ist, wobei die anderen Öffnungen durch die Verschlussmittel verschlossen sind, um die besagten Einlass- und Auslassrohre in mehreren Konfigurationen zu verbinden.

2. Bearbeitungszelle nach vorstehendem Anspruch, umfassend mindestens eine zu einem Strang (4a) führende Trägerstruktur (14), die konfiguriert ist, um ein Werkzeug (15) in den Strang (4a) einzuführen und zu halten, wobei die Trägerstruktur (14) einen schrägen Vorsprung in Bezug auf eine Normale zu einer Längsachse des Stranges (4a) bildet.

3. Bearbeitungszelle nach vorstehendem Anspruch, wobei sich die Trägerstruktur (14) in einem schrägen Winkel, vorzugsweise von weniger als 90 Grad und vorzugsweise von mehr als oder gleich 10 Grad, insbesondere von etwa 15 bis 25 Grad, in Bezug auf die Normale zur Achse des Stranges (4a) erstreckt.

4. Bearbeitungszelle nach einem der vorstehenden Ansprüche, wobei sich die Öffnungen (4, 5, 8, 10) entlang weitgehend koplanarer Achsen erstrecken.

5. Bearbeitungszelle nach einem der vorstehenden Ansprüche, wobei das Verschlussmittel (9, 11) einen Stopfen (12) umfasst, der Elemente des Bearbeitungsteils (3) aufnehmen kann.

6. Bearbeitungszelle nach vorstehendem Anspruch, umfassend einen Verbindungskragen (20), der mindestens eine Trennkontur (21, 22) und einen Trennring (23) umfasst.

7. Bearbeitungszelle nach vorstehendem Anspruch, wobei der Kragen eine innere Trennkontur (21) umfasst, die konfiguriert ist, um ein kleines Rohr innen aufzunehmen, und eine äußere Trennkontur (22), die konfiguriert ist, um ein kleines Rohr außen aufzunehmen, wobei der Trennring (23) konfiguriert ist, um mit der Anschlussöffnung (4, 5, 8, 10) zusammenzuwirken.

8. Mess- und/oder Injektionsvorrichtung, umfassend eine Bearbeitungszelle nach einem der vorstehenden Ansprüche, einschließlich mindestens Anspruch 2, und mindestens ein Mess- und/oder Injektionswerkzeug (15), das in die Trägerstruktur (14) einsetzbar ist.

## Claims

1. Treatment cell (1) comprising a chamber (2) housing a treatment part (3), the chamber (2) comprising two connection mouths (4, 5), each being designed to connect a pipe (6, 7), **characterized in that** the chamber (2) further comprises at least one third connection mouth (8) and a fourth connection mouth (10) which are designed to connect a pipe (6, 7), said mouths (4, 5, 8, 10) being angularly spaced at flat or right angles, the treatment part (3) being arranged at the intersection of the mouths (4, 5, 8, 10), the chamber (2) comprising a first sealing means (9) and a second sealing means (11) which are designed to seal one of said mouths (4, 5, 8, 10), said cell (1) further comprising a coupling arm (4a, 5a, 8a, 10a) for each connection mouth (4, 5, 8, 10), said coupling arms being cylindrical, having the same diameter and having an identical end, said treatment cell being designed such that an inlet pipe (6) can be independently connected to one of the mouths (4, 5, 8, 10) and an outlet pipe (7) to another mouth, the other mouths being sealed by the sealing means so as to couple said inlet and outlet pipes in several configurations.

2. Treatment cell according to the preceding claim, comprising at least one carrier structure (14) which opens onto an arm (4a) and is designed to introduce and hold a tool (15) in the arm (4a), said carrier structure (14) projecting obliquely with respect to a normal to a longitudinal axis of the arm (4a).

3. Treatment cell according to the preceding claim, wherein said carrier structure (14) extends at an oblique angle, preferably less than 90 degrees and preferably greater than or equal to 10 degrees, in particular approximately 15 to 25 degrees, with respect to the normal to the axis of the arm (4a).

4. Treatment cell according to any of the preceding claims, wherein the mouths (4, 5, 8, 10) extend along substantially coplanar axes.

5. Treatment cell according to any of the preceding claims, wherein the sealing means (9, 11) comprises a stopper (12) which can receive elements of the treatment part (3).

6. Treatment cell according to the preceding claim, comprising a coupling collar (20) which comprises at least one partitioning contour (21, 22), and a partitioning ring (23).

7. Treatment cell according to the preceding claim, wherein the collar comprises an internal partitioning contour (21) designed to internally receive a small pipe and an external partitioning contour (22) designed to externally receive a small pipe, the partitioning ring (23) being designed to interact with the connection mouth (4, 5, 8, 10).

8. Measuring and/or injection apparatus comprising a treatment cell according to any of the preceding claims including at least claim 2, and at least one measuring and/or injection tool (15) can be inserted in said carrier structure (14).
